# EUROPEAN PATENT SPECIFICATION

(11) **EP 3 330 072 B1**
(45) Date of publication and mention of the grant of the patent: **08.04.2020**
(21) Application number: 16830340.2
(22) Date of filing: 14.07.2016
(51) Int. Cl.: B32B 5/06, B32B 5/08, B32B 5/26, B32B 37/18, B32B 5/02, B32B 5/12, B32B 7/04, B32B 1/00

(54) **TEXTILE LAMINATE, TEXTILE LAMINATE PRODUCTION METHOD, AND TEXTILE LAMINATE PRODUCTION DEVICE**
TEXTILLAMINAT, TEXTILLAMINATHERSTELLUNGSVERFAHREN UND TEXTILLAMINATHERSTELLUNGSVORRICHTUNG
STRATIFIÉ TEXTILE, PROCÉDÉ DE FABRICATION DE STRATIFIÉ TEXTILE ET DISPOSITIF DE FABRICATION DE STRATIFIÉ TEXTILE

(30) Priority: 28.07.2015 JP 2015148903
(43) Date of publication of application: 06.06.2018
(73) Proprietor: Kabushiki Kaisha Toyota Jidoshokki, Kariya-shi, Aichi 448-8671 (JP)
(72) Inventor: HORI, Fujio, Kariya-shi Aichi 448-8671 (JP); KAMIYA, Ryuta, Kariya-shi Aichi 448-8671 (JP)
(74) Representative: TBK
(86) International application number: PCT/JP2016/070895
(87) International publication number: WO 2017/018235

(56) References cited:
- EP-A1- 2 671 707
- EP-A2- 0 073 648
- JP-A- H07 241 846
- JP-A- 2003 530 251
- JP-A- 2007 297 753
- JP-A- 2008 520 847
- JP-A- 2009 524 541
- JP-A- 2010 017 934
- JP-A- 2011 121 372
- JP-A- 2012 144 806

## Description

### TECHNICAL FIELD

The present invention relates to a textile laminate in which a plurality of unidirectional textiles having a plurality of yarns arranged in a uniaxial orientation are laminated, and the unidirectional textiles are joined in the lamination direction by joining yarns. The present invention also relates a textile laminate production method and a textile laminate production device.

### BACKGROUND ART

Fiber-reinforced composite materials (hereunder referred to simply as composite materials) are widely used as lightweight structural materials. Woven textile structures employing three-dimensional woven textiles are used as reinforced base materials for composite materials. For more general use of a woven textile structure as a reinforced base material for a composite material, the woven textile structure must have a twisted structure instead of a simple flat form.

The three-dimensional fiber structure disclosed in JP 2007 297753 A is an example of a woven textile structure having a twisted structure, thus disclosing a textile laminate according to the preamble of claim 1. Further composite materials are disclosed by EP 0 073 648 A2 and EP 2 671 707 A1. As shown in Fig. 10, the three-dimensional fiber structure 80 of JP 2007 297753 A is constructed by joining biaxially oriented laminated fiber layers 82, each formed by laminating a fiber layer 81 composed of continuous fibers, using yarn in the thickness direction 83. Biaxial orientation of the three-dimensional fiber structure 80 means orientation in the longitudinal direction and transverse direction of the three-dimensional fiber structure 80. The three-dimensional fiber structure 80 also includes a bent section 84 and flat sections 85 extending from the opposite sides of the bent section 84 in the longitudinal direction of the three-dimensional fiber structure 80. The three-dimensional fiber structure 80 has a propeller shape in which the flat sections 85 are twisted around the bent section 84 as the center. The three-dimensional fiber structure 80 is twisted around the torsional axis line extending in the longitudinal direction.

The three-dimensional fiber structure 80 disclosed in JP 2007 297753 A is produced by twisting a primary structure, which is formed by pre-joining the fiber layers 81 using yarn in the thickness direction 83. At the primary structure stage, the sections of each fiber layer 81 that are to serve as the flat sections 85 are joined by the yarn in the thickness direction 83, while the sections that are to serve as the bent section 84 are not joined by the yarn in the thickness direction 83. Even when the primary structure is twisted, therefore, the continuous fibers of the flat sections 85 are unable to follow twisting of the primary structure, since each fiber layer 81 is joined by the yarn in the thickness direction 83. Thus, the continuous fibers of the flat sections 85 bend and curve in unnatural shapes that do not follow twisting of the primary structure. The straightness of the continuous fibers therefore fails to be maintained and the strength of the flat sections 85 is reduced.

### SUMMARY OF THE INVENTION

### Problems that the Invention is to Solve

It is an objective of the present invention to provide a textile laminate which, although having a twisted structure, maintains the straightness of the yarn and has no reduction in strength, a textile laminate production method, and a textile laminate production device.

### Means for Solving the Problems

To achieve the foregoing objective and in accordance with a first aspect of the present invention, a textile laminate is provided in which a plurality of unidirectional textiles having a plurality of yarns arranged in a uniaxial orientation are laminated. The unidirectional textiles are joined in the lamination direction with joining yarns. The textile laminate is twisted around a torsion axis, which extends in a straight line in a predetermined direction. The yarns of at least one of the unidirectional textiles are oriented in a manner intersecting with the torsion axis. The textile laminate includes a pair of side edge sections positioned at opposite ends in the axial direction of the torsion axis and torsional edge sections connecting the side edge sections to each other. The yarns of the unidirectional textile intersecting with the torsion axis as viewed from the direction orthogonal to the torsion axis extend in straight lines from the torsion axis toward the torsional edge sections.

To achieve the foregoing objective and in accordance with a second aspect of the present invention, a method of producing a textile laminate in which a plurality of unidirectional textiles having a plurality of yarns arranged in a uniaxial orientation are laminated is provided The unidirectional textiles are joined in the lamination direction by joining yarns. The method includes: laminating the unidirectional textiles such that the yarns of at least one of the unidirectional textiles are oriented so as to intersect with a torsion axis; twisting the laminated unidirectional textiles around the torsion axis, which extends in a straight line in a predetermined direction; and joining the twisted unidirectional textiles in the lamination direction with joining yarns.

To achieve the foregoing objective and in accordance with a third aspect of the present invention, a production device for a textile laminate in which a plurality of unidirectional textiles having a plurality of yarns arranged in a uniaxial orientation are laminated is provided. The unidirectional textiles are joined in the lamination direction with joining yarns, and the textile laminate is twisted around a torsion axis that extends in a straight line in a predetermined direction. The production device includes a first laminating frame and a second laminating frame holding the unidirectional textiles in a twisted state while being laminated, and a fixing member that fixes the unidirectional textiles in the state held by the first laminating frame and the second laminating frame. A plurality of back plates supporting the unidirectional textiles are attachable to and detachable from the first laminating frame. A plurality of press plates that press the unidirectional textiles toward the back plate are attachable to and detachable from the second laminating frame.

### BRIEF DESCRIPTION OF THE DRAWINGS

Fig. 1 is a perspective view showing a textile laminate according to one embodiment of the present invention.
Fig. 2 is a longitudinal cross-sectional view of the textile laminate.
Fig. 3 is an exploded perspective view of a production device for a textile laminate.
Fig. 4 is a perspective view of the production device for a textile laminate.
Fig. 5 is a partial perspective view for describing a textile laminate production method.
Fig. 6 is a perspective view schematically showing a modification of a textile laminate.
Fig. 7 is a cross-sectional view showing another example of a textile laminate.
Fig. 8 is a perspective view schematically showing a modification of a textile laminate.
Fig. 9 is a cross-sectional view schematically showing a modification of a textile laminate.
Fig. 10 is a diagram illustrating the background art.

### MODES FOR CARRYING OUT THE INVENTION

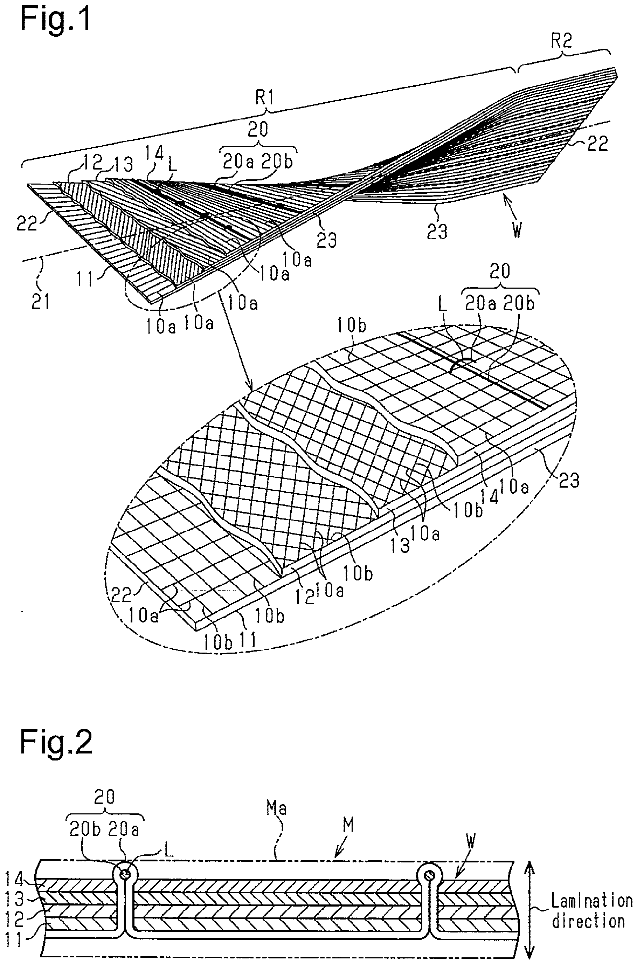

A textile laminate, a textile laminate production method, and a textile laminate production device according to one embodiment will now be described with reference to Figs. 1 to 5.

As shown in Fig. 2, a fiber-reinforced composite material M is formed by impregnating a textile laminate W as a reinforced base material with a matrix resin Ma.

As shown in Figs. 1 and 2, the textile laminate W is constructed by stacking four fiber layers 11 to 14. Hereunder, the first fiber layer 11 is the fiber layer composing the lowermost layer of the textile laminate W and the second fiber layer 12 is the fiber layer stacked on the first fiber layer 11. Also, the third fiber layer 13 is the fiber layer stacked on the second fiber layer 12, and the fourth fiber layer 14 is the fiber layer stacked on the third fiber layer 13 and forming the uppermost layer of the textile laminate W.

The lamination direction is the direction in which the first to fourth fiber layers 11 to 14 are stacked in the textile laminate W. The thickness direction is the lamination direction of the first to fourth fiber layers 11 to 14, and the thickness of each of the fiber layers 11 to 14 is the dimension along the thickness direction. The first to fourth fiber layers 11 to 14 have rectangular surfaces in a plan view. Also, the longitudinal direction is the direction along the long sides of the surfaces of the first to fourth fiber layers 11 to 14, and the transverse direction is the direction along the short sides.

As shown in Fig. 1, each of the first to fourth fiber layers 11 to 14 is constructed by aligning a plurality of warp yarns 10a in one direction so that they are uniaxially oriented, and joining the warp yarns 10a by weft yarns 10b. The warp yarns 10a are composed of carbon fibers and the weft yarns 10b are composed of nylon yarns, for example. The weft yarns 10b are fused with the warp yarns 10a. The uniaxial orientation of the warp yarns 10a is thus maintained.

The orientation angle of the warp yarns 10a in the first fiber layer 11 is 0 degrees. In this case, the warp yarns 10a are arranged in a state extending in the longitudinal direction of the first fiber layer 11. The orientation angle of the warp yarns 10a in the second fiber layer 12 is 45 degrees. In this state, the warp yarns 10a are aligned in a state inclined 45 degrees with respect to the longitudinal direction in the second fiber layer 12. The orientation angle of the warp yarns 10a in the third fiber layer 13 is -45 degrees. Thus, the warp yarns 10a are aligned in a state inclined -45 degrees with respect to the longitudinal direction in the third fiber layer 13. The orientation angle of the warp yarns 10a in the fourth fiber layer 14 is 90 degrees, such that the warp yarns 10a are arranged in a state extending in the transverse direction of the fourth fiber layer 14. Thus, the textile laminate W has quasi-isotropy in four directions, based on the orientation angles of the warp yarns 10a in the first to fourth fiber layers 11 to 14.

As shown in Fig. 2, the first to fourth fiber layers 11 to 14 are joined in the lamination direction by a joint structure 20 having joining yarns 20a extending in the thickness direction. The joint structure 20 is constructed of the joining yarns 20a and retention yarns 20b. The joining yarns 20a are arranged in a state extending in the longitudinal direction on the surface of the first fiber layer 11. Furthermore, each of the joining yarns 20a is inserted into the textile laminate W at a predetermined pitch from the outer side. In addition, each of the joining yarns 20a is folded into a loop after protruding from the outer surface of the fourth fiber layer 14 of the textile laminate W. Each of the joining yarns 20a also extends in the lamination direction that is orthogonal to the surface of the first to fourth fiber layers 11 to 14.

The retention yarns 20b are arranged in a state extending in the transverse direction on the surface of the fourth fiber layer 14. The retention yarns 20b are arranged at intervals in the longitudinal direction of the fourth fiber layer 14. Each of the retention yarns 20b is inserted into the loops L of the joining yarns 20a, arranged such that the joining yarns 20a do not slip out from the textile laminate W.

As shown in Fig. 1, the textile laminate W includes a twisted region R1, which is twisted around the torsion axis 21 as the center, and a flat region R2, which is continuous with the twisted region R1 and flat-shaped. The torsion axis 21 runs through the center point in the transverse direction of the textile laminate W. The torsion axis 21 also has straightness, such that it extends in a straight line along the longitudinal direction. The torsion axis 21 runs through the twisted region R1 and the flat region R2. The short edges of the textile laminate W located at the opposite ends of the torsion axis 21 in the axial direction will hereunder be referred to as the side edge sections 22. The long edge sections of the textile laminate W connecting the edges corresponding to the two side edge sections 22 will be referred to as the torsional edge sections 23.

The warp yarns 10a of the first fiber layer 11 extend in a straight line in a state parallel to the torsion axis 21. The warp yarns 10a of the second fiber layer 12 extend in straight lines from the torsion axis 21 toward each of the torsional edge sections 23, in a state inclined 45 degrees with respect to the torsion axis 21. The warp yarns 10a of the third fiber layer 13 extend in straight lines from the torsion axis 21 toward each of the torsional edge sections 23, in a state inclined -45 degrees with respect to the torsion axis 21. The warp yarns 10a of the fourth fiber layer 14 extend in straight lines from the torsion axis 21 toward each of the torsional edge sections 23, in a state orthogonal to the torsion axis 21. Thus, when the textile laminate W is viewed from the direction orthogonal to the torsion axis 21, the warp yarns 10a of the second to fourth fiber layers 12 to 14 extend in straight lines from the torsion axis 21 toward the torsional edge sections 23, in both the twisted region R1 and the flat region R2.

A production device for the textile laminate W will now be described.

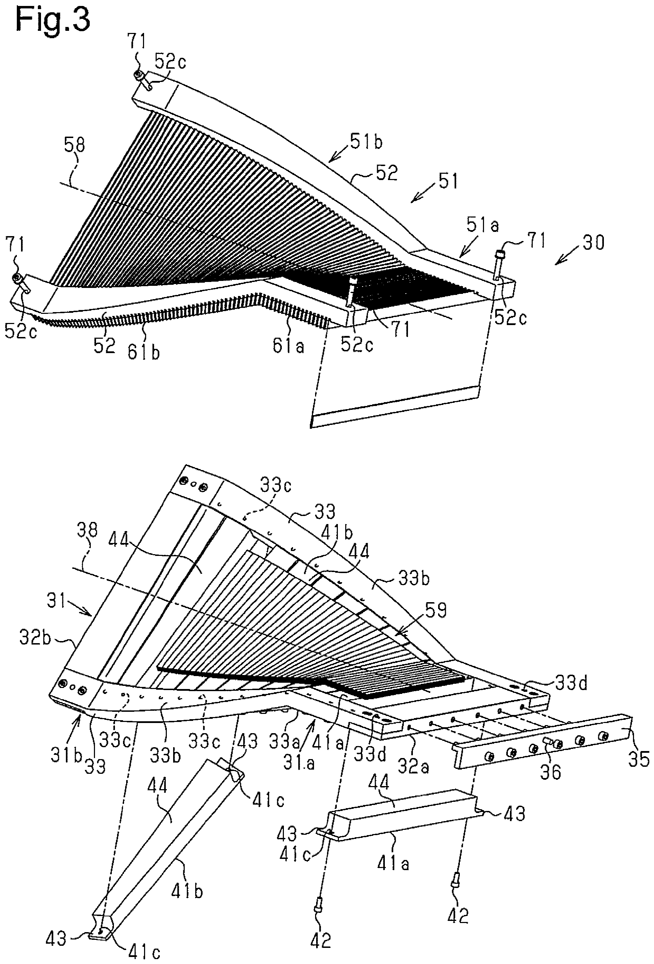

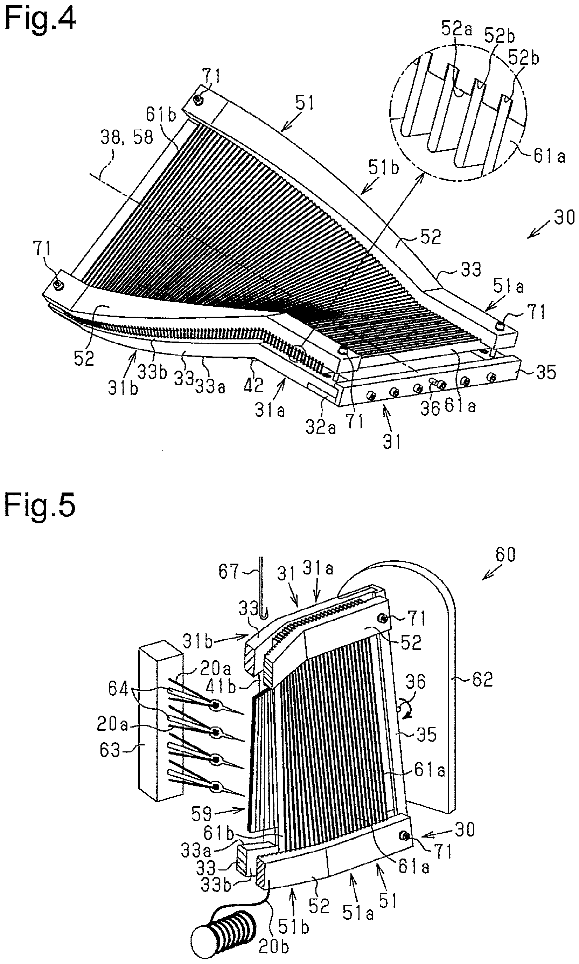

As shown in Figs. 3 and 4, the production device 30 has a first laminating frame 31 and a second laminating frame 51, which support the first to fourth fiber layers 11 to 14 in a twisted state while being laminated. The production device 30 further has fixing members 71, which fix the first to fourth fiber layers 11 to 14 in a state sandwiched between the first laminating frame 31 and the second laminating frame 51. The fixing members 71 are bolts.

The first laminating frame 31 is made of metal. The first laminating frame 31 has a rectangular flat first base plate 32a and second base plate 32b located on the opposite ends in the longitudinal direction. The first laminating frame 31 also has a pair of support plates 33 connecting together the corresponding edges of the first base plate 32a and the second base plate 32b. The first laminating frame 31 is formed in a rectangular frame shape by integrating the first base plate 32a, the second base plate 32b and the support plates 33.

The first laminating frame 31 has a flat section 31a in the vicinity of the first base plate 32a. The first laminating frame 31 has, between the flat section 31a and the second base plate 32b, a twisted section 31b contorted around the torsion axis 38 as the center. The torsion axis 38 is straight in the longitudinal direction, and passes through the center point in the transverse direction of the twisted section 31b.

The first laminating frame 31 also has a shaft-mounting plate 35, which is integrated with the first base plate 32a. The shaft-mounting plate 35 includes a rotary shaft 36 situated coaxially with extension of the torsion axis 38.

The portions composing the flat sections 31a of each of the support plates 33 are rectangular solids. The portions composing the twisted sections 31b of each of the support plates 33 are gently twisted. The spacing between the pair of support plates 33 is constant along the longitudinal direction of the support plates 33. The support plates 33 each have two sides on the opposite sides in the thickness direction. One side of the support plates 33 is the attachment side 33a, and the other side is the support side 33b. The support plates 33 include a plurality of screw holes 33c that are indented from the attachment side 33a. The screw holes 33c are arranged at equal intervals in the longitudinal direction of the support plates 33. The support plates 33 further include fixing screw holes 33d at both ends in the longitudinal direction.

The first laminating frame 31 includes a plurality of back plates 41a, 41b attached to the support plates 33. The back plates 41a, 41b support the first to fourth fiber layers 11 to 14.

The back plates 41a, 41b are made of metal. The back plates include a back plate 41a for the flat section, attached to the flat section 31a, and a back plate 41b for the twisted section, attached to the twisted section 31b. The back plate 41a for the flat section is a rectangular plate. The back plate 41b for the twisted section is twisted to match the degree of twisting of the pair of support plates 33, around a center at the midpoint of the rectangular plate in its longitudinal direction.

Each of the back plates 41a, 41b has insertion holes 41c through which the opposite ends in the longitudinal direction are inserted in the thickness direction. Bolts 42 can be inserted into the insertion holes 41c. The bolts 42 can be screwed into the screw holes 33c of the support plates 33.

At the opposite ends in the longitudinal direction of each of the back plates 41a, 41b, there are provided steps 43, which are thinner than the other locations. Also, supporting members 44 are provided between the steps 43 of each of the back plates 41a, 41b. The depth from the surface of the supporting member 44 to the steps 43 is the same as the thickness of the support plates 33. The length of each of the supporting members 44 is slightly shorter than the distance between the facing inner surfaces of the pair of support plates 33.

At the back plate 41a for the flat section, the steps 43 are in contact with the flat sections 31a of the support plates 33, and the supporting member 44 is situated between the adjacent support plates 33. At the back plate 41b for the twisted section, the steps 43 are in contact with the twisted sections 31b of the support plates 33, and the supporting member 44 is situated between the adjacent support plates 33. In this state, the bolts 42 are inserted in the insertion holes 41c and screwed in the screw holes 33c of the support plates 33, thereby attaching each of the back plates 41a, 41b to the support plates 33. On the other hand, the bolts 42 may be removed from the screw holes 33c to remove each of the back plates 41a, 41b from the support plates 33, thereby separating them from the first laminating frame 31.

The second laminating frame 51 is made of metal. The second laminating frame 51 has a flat section 51a in the vicinity of one end at the opposite ends of the longitudinal direction. The second laminating frame 51 also has, between the flat section 51a and the other end, a twisted section 51b contorted around the torsion axis 58 as the center. The torsion axis 58 is straight in the longitudinal direction, and passes through the center point in the transverse direction of the twisted section 51b.

The second laminating frame 51 has a pair of attachment plates 52. The portions composing the flat sections 51a of each of the attachment plates 52 are rectangular solids. The portions composing the twisted sections 51b of each of the attachment plates 52 are gently twisted. As shown in Fig. 4, the attachment plates 52 each have two sides on the opposite sides in the thickness direction. One side of the attachment plate 52 is the plate attachment side 52a. The attachment plates 52 each include a plurality of attachment grooves 52b indented from the plate attachment side 52a. The attachment grooves 52b are arranged at equal intervals in the longitudinal direction of the attachment plates 52.

As shown in Fig. 3, each of the attachment plates 52 has a through-hole 52c running through the thickness direction at the opposite ends in the longitudinal direction. The fixing members 71 can be inserted into through-holes 52c in order to fix the second laminating frame 51 to the first laminating frame 31. The fixing members 71 can be screwed into the fixing screw holes 33d of the support plates 33.

The second laminating frame 51 includes a plurality of press plates 61a, 61b attached to the attachment plates 52. The press plates 61a, 61b press the first to fourth fiber layers 11 to 14 toward the back plates 41a, 41b. The press plates 61a, 61b are made of metal. The press plates include press plates 61a for the flat section, attached to each flat section 51a, and press plates 61b for the twisted section, attached to each twisted section 51b. The press plates 61a for the flat section are the same type of rectangular plates as the press plates 61b for the twisted section. As shown in Fig. 4, a plurality of grooves are formed matching the torsion of the twisted sections 51b, so that the press plates 61b for the twisted section can be inserted into the attachment grooves 52b of the twisted sections 51b.

The opposite ends in the longitudinal direction of the press plates 61a for the flat section are integrated with the attachment plates 52 by being inserted in the attachment grooves 52b of the flat sections 51a of the attachment plates 52. Likewise, the opposite ends in the longitudinal direction of the press plates 61b for the twisted section are integrated with the attachment plates 52 by being inserted in the attachment grooves 52b of the twisted sections 51b of the attachment plates 52. The long side edge sections of the press plates 61a, 61b protrude from the plate attachment sides 52a of the attachment plates 52, with the press plates 61a, 61b being attached to the attachment plates 52.

In the production device 30, the first laminating frame 31 and the second laminating frame 51 can be fixed by the fixing members 71, while the first to fourth fiber layers 11 to 14 are supported on the flat section 31a and the twisted section 31b of the first laminating frame 31. The first to fourth fiber layers 11 to 14 are sandwiched between the back plates 41a, 41b and the press plates 61a, 61b while the first laminating frame 31 and the second laminating frame 51 are being fixed.

A production method for the textile laminate W using the production device 30 will now be described.

First, the joining apparatus 60 for joining of the fiber layers supported on the production device 30 will be described. The stack of the first to fourth fiber layers 11 to 14 on which the joint structure 20 has not been formed, but which is still sandwiched in the lamination direction by the production device 30, will be referred to as the precursor 59.

As shown in Fig. 5, the joining apparatus 60 includes a rotating device 62, a needle support 63, and a retention yarn inserting needle 67. The rotating device 62 rotationally supports the production device 30. The needle support 63 can move in the directions toward and away from the production device 30 supported on the rotating device 62. The retention yarn inserting needle 67 is able to move in the vertical direction.

The rotary shaft 36 of the shaft-mounting plate 35 of the production device 30 can be attached to and detached from the rotating device 62. The rotating device 62 rotates the production device 30 around the rotary shaft 36 as the center. The needle support 63 can move toward and away from the production device 30 by a drive unit (not shown). The needle support 63 includes a plurality of insertion needles 64 for insertion of the joining yarns 20a into the precursor 59. The joining yarns 20a pass through the tips of each of the insertion needles 64. The insertion needles 64 are arranged in the vertical direction of the needle support 63.

The retention yarn inserting needle 67 is able to move in the vertical direction, i.e. the direction in which the insertion needles 64 are arranged. The retention yarn inserting needle 67 is disposed in the vicinity of the topmost insertion needle 64. The retention yarns 20b are disposed in the vicinity of the bottommost insertion needle 64.

In order to produce a textile laminate W using the production device 30 and joining apparatus 60, first, as shown in Fig. 3, the back plate 41a for the flat section and the back plate 41b for the twisted section are attached to the support plates 33 of the first laminating frame 31. The support sides 33b of the support plates 33 are thus situated flush with the supporting member 44 of the back plate 41b.

Also, after placing the first fiber layer 11 on the flat section 31a and twisted section 31b of the first laminating frame 31, the first fiber layer 11 is pressed out along the torsional shape of the flat section 31a and twisted section 31b using a roller or the like (not shown). This causes the first fiber layer 11 to be shaped along the flat section 31a and the twisted section 31b.

Next, after placing the second fiber layer 12 on the first fiber layer 11, a roller or the like is used to press out the second fiber layer 12, in the same manner as for the first fiber layer 11. This causes the second fiber layer 12 to be shaped along the flat section 31a and the twisted section 31b. The third fiber layer 13 and fourth fiber layer 14 are also shaped in the same manner as the first fiber layer 11 and second fiber layer 12.

Next, the press plate 61a for the flat section and the press plate 61b for the twisted section are attached to the attachment plate 52 of the second laminating frame 51. The second laminating frame 51 is also placed on the uppermost fourth fiber layer 14. As shown in Fig. 4, after the fixing members 71 are inserted into the through-holes 52c of the second laminating frame 51, they are screwed into the fixing screw holes 33d of the first laminating frame 31. The press plates 61b for the twisted sections press the first to fourth fiber layers 11 to 14 in the lamination direction, while the twisted sections 31b, 51b sandwich them with the first to fourth fiber layers 11 to 14 in a twisted state. As a result, the precursor 59 is held with the torsion axes 38, 58 of the production device 30 in a state twisted around the center. Also, the press plates 61a for the flat sections press the first to fourth fiber layers 11 to 14 in the lamination direction, while the flat sections 31a, 51a sandwich them with the first to fourth fiber layers 11 to 14 in a flat state

Next, as shown in Fig. 5, the rotary shaft 36 of the production device 30 is attached to the rotating device 62, and the production device 30 is rotationally supported around the rotary shaft 36 as the center.

Next, in the production device 30, the back plate 41b for the twisted section, situated at the locations where the joining yarns 20a are to be inserted, is removed from the first laminating frame 31. The press plate 61b for the twisted section, situated at the locations where the joining yarns 20a are to be inserted, is also removed from the second laminating frame 51. This causes the portion of the precursor 59 where the joining yarns 20a are to be inserted to be exposed from the production device 30.

Next, the needle support 63 is placed at the exposed location of the precursor 59, and the insertion needles 64 are situated facing the exposed portion of the precursor 59. At this time, the rotating device 62 rotates the precursor 59 together with the production device 30, so that the insertion needles 64 are orthogonal to the surface of the precursor 59. In addition, the needle support 63 is brought close to the precursor 59 and the insertion needles 64 are inserted into the precursor 59 through the outer surface of the first fiber layer 11. When the insertion needles 64 are inserted into the precursor 59, the joining yarns 20a are inserted in the lamination direction of the precursor 59 together with the insertion needles 64. After the tips of the insertion needles 64 have protruded from the outer surface of the fourth fiber layer 14 of the precursor 59, the needle support 63 is moved slightly in the direction away from the precursor 59. This causes loops of the joining yarns 20a to be formed on the surface of the precursor 59.

When loops are thus formed by the joining yarns 20a on the outer surface of the fourth fiber layer 14, a retention yarn 20b is passed through the loops together with the retention yarn inserting needle 67. When the needle support 63 is separated from the precursor 59 and the insertion needles 64 move away from the precursor 59, the joining yarns 20a are pulled back while the joining yarns 20a inserted into the precursor 59 are clamped by the retention yarn 20b so that they cannot slip out.

Then, after the joint structure 20 has been formed in part of the precursor 59, the removed back plate 41b is attached to the first laminating frame 31 while the removed press plate 61b is attached to the second laminating frame 51.

Next, another joint structure 20 is formed adjacent to the already formed joint structure 20. In this case as well, the back plate 41b for the twisted section and the press plate 61b for the twisted section that are situated at the location where the other joint structure 20 is to be formed are removed from the first laminating frame 31 and second laminating frame 51, respectively. This causes the adjacent portion of the formed joint structure 20 in the precursor 59 to be exposed from the production device 30. The needle support 63 is then situated facing the precursor 59 that has been exposed from the production device 30, and a joint structure 20 is formed in the same manner as above.

Next, removal and attachment of the press plate 61b and back plate 41b are carried out along the entire longitudinal direction of the precursor 59, forming a joint structure 20. As a result, the first to fourth fiber layers 11 to 14 are joined in the lamination direction by the joint structure 20, while the twisted shape is held by the production device 30.

The flat region R2 of the textile laminate W is thus produced by the flat section 31a of the first laminating frame 31 and the flat section 51a of the second laminating frame 51. Also, the twisted region R1 of the textile laminate W is produced by the twisted section 31b of the first laminating frame 31 and the twisted section 51b of the second laminating frame 51.

Finally, the fixing members 71 are removed from the fixing screw holes 33d, the first laminating frame 31 and second laminating frame 51 are disassembled, and the textile laminate W is removed from the production device 30. The produced textile laminate W is impregnated with a thermosetting matrix resin Ma, and the matrix resin Ma is hardened. Impregnation and hardening of the matrix resin Ma are carried out by the resin transfer molding (RTM) method. This produces, as a result, a fiber-reinforced composite material M including a textile laminate W as the reinforced base material.

The above-described embodiment achieves the following advantages.
(1) The textile laminate W has a structure that is twisted around the torsion axis 21 as the center. In the textile laminate W, each of the warp yarns 10a composing the second to fourth fiber layers 12 to 14 extend in a straight line from the torsion axis 21 toward the torsional edge section 23. Thus, the warp yarns 10a neither bend nor curve, despite the twisted structure of the textile laminate W. Since the straightness of the warp yarns 10a of the second to fourth fiber layers 12 to 14 can therefore be maintained, the strength of the textile laminate W is less likely to be reduced.
(2) The production device 30 of the textile laminate W can hold the precursor 59, including the laminated first to fourth fiber layers 11 to 14, in a twisted state. It can also join the twisted precursor 59 in the lamination direction using the joining yarns 20a and retention yarns 20b. In other words, the textile laminate W is not produced by twisting the precursor 59 after the first to fourth fiber layers 11 to 14 have been joined in the lamination direction using the joining yarns 20a and retention yarns 20b. Thus, the warp yarns 10a of the first to fourth fiber layers 11 to 14 are not pulled in a state that they cannot follow twisting. This helps prevent wrinkles from forming on the surface of the textile laminate W, and allows the straightness of the warp yarns 10a to be more easily maintained.
(3) In the production device 30, the first laminating frame 31 is detachable from the back plates 41a, 41b, and the second laminating frame 51 is detachable from the press plates 61a, 61b. Therefore, some of the back plates 41a, 41b and some of the press plates 61a, 61b may be removed from the production device 30. This allows for the exposure of only the portion of the precursor 59 at the location where the insertion needles 64 are to be inserted, while the precursor 59 is held on the production device 30, so that the joining yarns 20a can be inserted at the exposed location of the precursor 59. Thus, the first to fourth fiber layers 11 to 14 do not separate from each other when the joining yarns 20a are used to join the precursor 59.
(4) The production device 30 includes a rotary shaft 36 coaxially with the torsion axis 21. Therefore, by attaching the rotary shaft 36 on the rotating device 62 of the joining apparatus 60, the rotating device 62 can rotate the production device 30 around the torsion axis 21 as the center. By thus rotating the precursor 59 together with the production device 30 around the torsion axis 21 as the center, it is possible to situate the direction of advance and retreat of the insertion needles 64 in an orientation orthogonal to the precursor 59. The insertion needles 64 can therefore be inserted along the lamination direction of the precursor 59. Since the joining yarns 20a are therefore not twisted, the strength of the joining yarns 20a is not reduced.
(5) The second laminating frame 51 includes press plates 61a, 61b. The press plates 61a, 61b press the precursor 59 toward the back plates 41a, 41b of the first laminating frame 31. Thus, the first to fourth fiber layers 11 to 14 do not separate in the lamination direction or shift in the layer direction, between the first laminating frame 31 and the second laminating frame 51. As a result, the precursor 59 can be joined using the joining yarns 20a while keeping the shape of the precursor 59.
(6) One production method for a textile laminate W is lamination by attachment of prepregs. A textile laminate W with a twisted shape is produced by attaching the prepregs while twisting them. However, such twisting of prepregs causes the lengths of the edges of the prepregs to vary from the lengths before twisting, since the edges of the prepregs are pulled. For this reason, it is difficult to align and attach the edges of fiber layers with twisted shapes. In such cases, it becomes necessary to produce the textile laminate W with a twisted shape by attaching the prepregs in the form of strips, but such operations are extremely time-consuming. According to the embodiment of the present invention, the production device 30 is used to allow joining of the first to fourth fiber layers 11 to 14 by the joining yarns 20a while keeping the twisted shapes of the first to fourth fiber layers 11 to 14. A textile laminate W with a twisted shape can therefore be easily produced.

The above-described embodiment may be modified as follows.

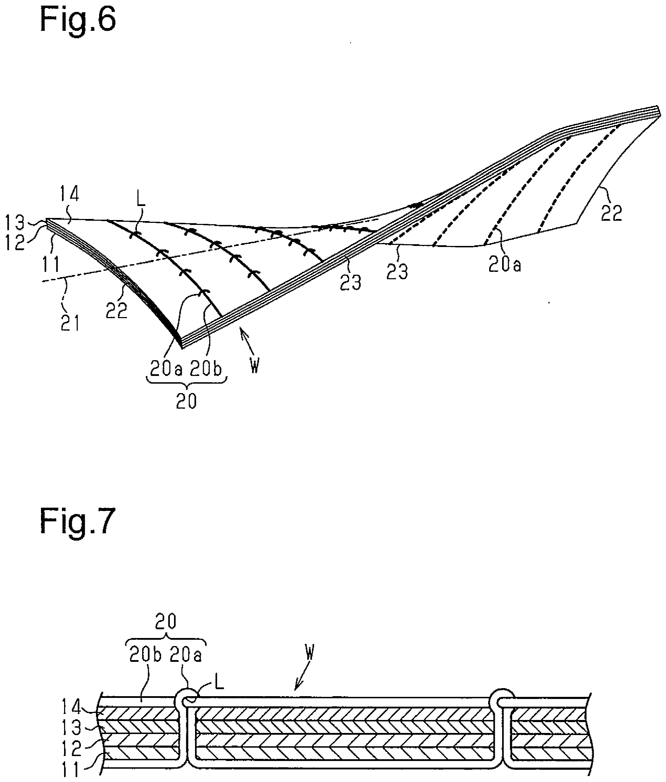

As shown in Figs. 6 and 7, the textile laminate W may have a twisted structure while having curved edges in the transverse direction. In such cases, the production device joins the first to fourth fiber layers 11 to 14 using the joining yarns 20a and retention yarns 20b, while the precursor 59 is twisted and the edges in the transverse direction are in a curved state. When the first to fourth fiber layers 11 to 14 are joined by the joining yarns 20a and retention yarns 20b at the curved sections as well, the joining yarns 20a are similarly inserted at one location at a time by a sewing machine so that the joining yarns 20a are inserted in the lamination direction.

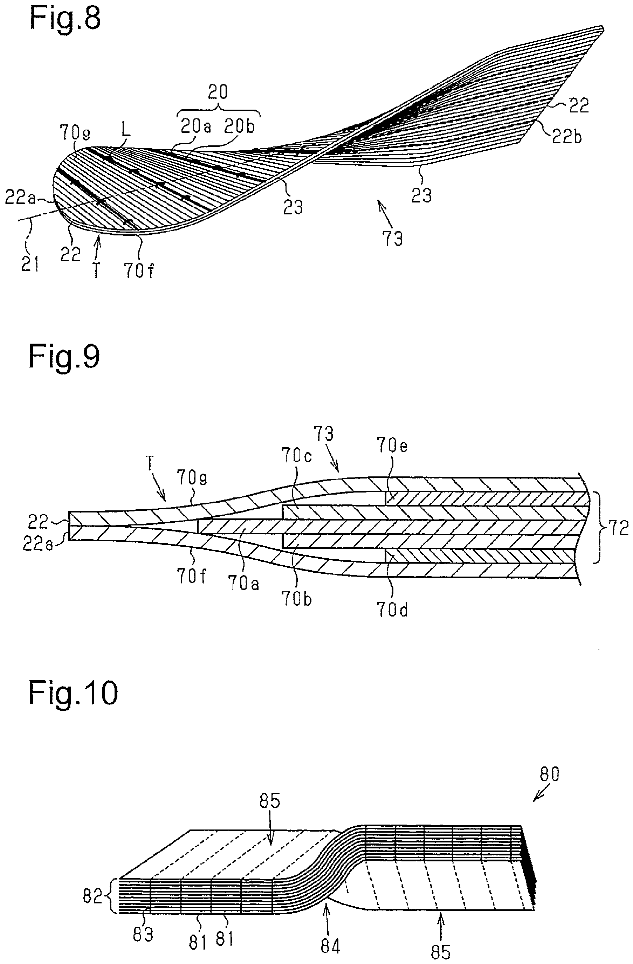

As shown in Fig. 8, the textile laminate 73 may have a tapered section T where the thickness gradually decreases as it approaches the first end 22a. In this case, the second end 22b of the torsion axis 21 is a thick section with a constant thickness.

As shown in Fig. 9, a core 72 is formed by first to fifth fiber layers 70a to 70e, at the first end 22a of the textile laminate 73. In addition, the core 72 is covered by a sixth fiber layer 70f and seventh fiber layer 70g from the opposite sides in the lamination direction. However, no tapered section T is formed at the second end 22b of the textile laminate 73, because all of the tips of the first to seventh fiber layers 70a to 70g are laminated in a state of being aligned.

The first fiber layer 70a is the longest fiber layer among the fiber layers composing the core 72. The second fiber layer 70b is disposed on one side of the first fiber layer 70a, while the third fiber layer 70c is disposed on the other side. The lengths of the second fiber layer 70b and third fiber layer 70c are smaller than the length of the first fiber layer 70a. In addition, the fourth fiber layer 70d is disposed on the outer side of the second fiber layer 70b, and the fifth fiber layer 70e is disposed on the outer side of the third fiber layer 70c. The lengths of the fourth fiber layer 70d and fifth fiber layer 70e are smaller than the lengths of the second fiber layer 70b and third fiber layer 70c.

Thus, the number of fiber layers forming the core 72 reduces from five to three to one toward the tip of the first end 22a, thereby gradually reducing the thickness of the core 72. Moreover, by covering the entirety of the core 72 by the sixth fiber layer 70f and seventh fiber layer 70g, the thickness of the tapered section T at the first end 22a gradually decreases toward the tip of the first end 22a. In addition, the first end 22a of the textile laminate 73 is chamfered into an arcuate shape, while the second end 22b is not chamfered and is therefore rectangular. The number of fiber layers forming the core 72 may be appropriately modified depending on the thickness of the textile laminate 73.

In the mode shown in Fig. 8, the first to fifth fiber layers 70a to 70e are joined in the lamination direction using the joint structure 20 formed by the joining yarns 20a and retention yarns 20b, while the core 72 is joined to the sixth fiber layer 70f and the seventh fiber layer 70g in the lamination direction using tufting yarns as the joining yarns. In this case, even with a seven-layer structure as in the textile laminate 73, the textile laminate 73 can still be joined in the lamination direction.

According to the above-illustrated embodiment, all of the orientation angles of the warp yarns 10a in the first to fourth fiber layers 11 to 14 are different. However, of the four fiber layers, only two or three of the fiber layers may be given different orientation angles for the warp yarns 10a. In such cases, the warp yarns 10a of at least one fiber layer extend in the direction intersecting the torsion axis 21.

In the production device 30, the flat section 31a of the first laminating frame 31 and the flat section 51a of the second laminating frame 51 may be eliminated, and the entirety of the first laminating frame 31 and second laminating frame 51 may be constructed of only the twisted sections 31b, 51b. In such a case, the textile laminate W is constructed of only the twisted region R1 and has no flat region R2.

According to the above-illustrated embodiment, the precursor 59 has a shape that is within the first laminating frame 31 and second laminating frame 51, but it may instead have a shape that protrudes out from the first laminating frame 31 and second laminating frame 51. In such a case, the perimeter of the textile laminate W may be cut to the desired shape after the textile laminate W has been produced.

The warp yarns 10a of the textile laminate W have quasi-isotropy in four directions, but the warp yarns 10a may instead have quasi-isotropy in three directions or six directions.

The textile laminate W may have no quasi-isotropy.

## Claims

1. A textile laminate (W) in which a plurality of unidirectional textiles (11, 12, 13, 14) having a plurality of yarns (10a) arranged in a uniaxial orientation are laminated, and the unidirectional textiles (11, 12, 13, 14) are joined in the lamination direction with joining yarns (20), wherein
the textile laminate (W) is twisted around a torsion axis (21), which extends in a straight line in a predetermined direction,
the yarns (10a) of at least one of the unidirectional textiles (11, 12, 13, 14) are oriented in a manner intersecting with the torsion axis (21),
the textile laminate (W) comprises:
a pair of side edge sections (22) positioned at opposite ends in the axial direction of the torsion axis (21), and
torsional edge sections (23) connecting the side edge sections (22) to each other,
**characterized in that**
the yarns (10a) of the unidirectional textile (12, 13, 14) intersecting with the torsion axis (21) as viewed from the direction orthogonal to the torsion axis (21) extend in straight lines from the torsion axis (21) toward the torsional edge sections (23).

2. The textile laminate (W) according to claim 1, wherein the joining yarns (20) include joining yarns (20a) that run through the unidirectional textiles (11, 12, 13, 14) in the lamination direction, and retention yarns (20b) that prevent the joining yarns (20a) from slipping out from the textile laminate (W).

3. A method of producing a textile laminate (W) in which a plurality of unidirectional textiles (11, 12, 13, 14) having a plurality of yarns (10a) arranged in a uniaxial orientation are laminated, and the unidirectional textiles (11, 12, 13, 14) are joined in the lamination direction by joining yarns (20), the method comprising:
laminating the unidirectional textiles (11, 12, 13, 14) such that the yarns (10a) of at least one of the unidirectional textiles (11, 12, 13, 14) are oriented so as to intersect with a torsion axis (21);
twisting the laminated unidirectional textiles (11, 12, 13, 14) around the torsion axis (21), which extends in a straight line in a predetermined direction; and
joining the twisted unidirectional textiles (11, 12, 13, 14) in the lamination direction with joining yarns (20).

4. A production device (30) for a textile laminate (W) in which a plurality of unidirectional textiles (11, 12, 13, 14) having a plurality of yarns (10a) arranged in a uniaxial orientation are laminated, the unidirectional textiles (11, 12, 13, 14) are joined in the lamination direction with joining yarns (20), and the textile laminate (W) is twisted around a torsion axis (21) that extends in a straight line in a predetermined direction, the production device (30) comprising:
a first laminating frame (31) and a second laminating frame (51) holding the unidirectional textiles (11, 12, 13, 14) in a twisted state while being laminated; and
a fixing member (71) that fixes the unidirectional textiles (11, 12, 13, 14) in the state held by the first laminating frame (31) and the second laminating frame (51), wherein
a plurality of back plates (41a, 41b) supporting the unidirectional textiles (11, 12, 13, 14) are attachable to and detachable from the first laminating frame (31), and
a plurality of press plates (61a, 61b) that press the unidirectional textiles (11, 12, 13, 14) toward the back plate (41a, 41b) are attachable to and detachable from the second laminating frame (51).

5. The production device (30) for a textile laminate (W) according to claim 4, further comprising a rotary shaft (36) that is coaxial with the torsion axis (21).

## Patentansprüche

1. Textillaminat (W), bei dem eine Vielzahl von unidirektionalen Textilien (11, 12, 13, 14) laminiert sind, die eine Vielzahl von in einer uniaxialen Ausrichtung angeordneten Fäden (10a) haben, und die unidirektionalen Textilien (11, 12, 13, 14) in der Laminationsrichtung mit Verbindungsfäden (20) verbunden sind, wobei
das Textillaminat (W) um eine Torsionsachse (21) verdreht ist, die sich in einer vorgegebenen Richtung geradlinig erstreckt,
die Fäden (10a) von mindestens einem der unidirektionalen Textilien (11, 12, 13, 14) so ausgerichtet sind, dass sie die Torsionsachse (21) schneiden,
das Textillaminat (W) Folgendes hat:
ein Paar Seitenrandbereiche (22), die an gegenüberliegenden Enden in der axialen Richtung der Torsionsachse (21) angeordnet sind, und
Torsionsrandbereiche (23), die die Seitenrandbereiche (22) miteinander verbinden,
**dadurch gekennzeichnet, dass**
die Fäden (10a) des unidirektionalen Textils (12, 13, 14), die bei Betrachtung aus der zu der Torsionsachse (21) senkrechten Richtung die Torsionsachse (21) schneiden, sich geradlinig von der Torsionsachse (21) in Richtung der Torsionsrandbereiche (23) erstrecken.

2. Textillaminat (W) nach Anspruch 1, wobei die Verbindungsfäden (20) Verbindungsfäden (20a), die in der Laminationsrichtung durch die unidirektionalen Textilien (11, 12, 13, 14) verlaufen, und Haltefäden (20b) aufweisen, die verhindern, dass die Verbindungsfäden (20a) aus dem Textillaminat (W) herausrutschen.

3. Verfahren zur Herstellung eines Textillaminats (W), bei dem eine Vielzahl von unidirektionalen Textilien (11, 12, 13, 14) laminiert sind, die eine Vielzahl von in einer uniaxialen Ausrichtung angeordneten Fäden (10a) haben, und die unidirektionalen Textilien (11, 12, 13, 14) in der Laminationsrichtung durch Verbindungsfäden (20) verbunden sind, wobei das Verfahren Folgendes umfasst:
Laminieren der unidirektionalen Textilien (11, 12, 13, 14), sodass die Fäden (10a) von mindestens einem der unidirektionalen Textilien (11, 12, 13, 14) so ausgerichtet sind, dass sie eine Torsionsachse (21) schneiden;
Verdrehen der laminierten unidirektionalen Textilien (11, 12, 13, 14) um die Torsionsachse (21), die sich in einer vorbestimmten Richtung geradlinig erstreckt; und
Verbinden der verdrehten unidirektionalen Textilien (11, 12, 13, 14) in der Laminationsrichtung mit Verbindungsfäden (20).

4. Herstellungsvorrichtung (30) für ein Textillaminat (W), bei dem eine Vielzahl von unidirektionalen Textilien (11, 12, 13, 14) laminiert sind, die eine Vielzahl von in einer uniaxialen Ausrichtung angeordneten Fäden (10a) haben, die unidirektionalen Textilien (11, 12, 13, 14) in der Laminationsrichtung mit Verbindungsfäden (20) verbunden sind, und das Textillaminat (W) um eine Torsionsachse (21) verdreht ist, die sich in einer vorbestimmten Richtung geradlinig erstreckt, wobei die Herstellungsvorrichtung (30) Folgendes hat:
einen ersten Laminierrahmen (31) und einen zweiten Laminierrahmen (51), die die unidirektionalen Textilien (11, 12, 13, 14) in einem verdrehten Zustand halten, während sie laminiert werden; und
ein Fixierbauteil (71), das die unidirektionalen Textilien (11, 12, 13, 14) in dem von dem ersten Laminierrahmen (31) und dem zweiten Laminierrahmen (51) gehaltenen Zustand fixiert, wobei
eine Vielzahl von Rückenplatten (41a, 41b), die die unidirektionalen Textilien (11, 12, 13, 14) tragen, an dem ersten Laminierrahmen (31) anbringbar und von diesem abnehmbar sind, und
eine Vielzahl von Pressplatten (61a, 61b), die die unidirektionalen Textilien (11, 12, 13, 14) in Richtung der Rückenplatte (41a, 41b) pressen, an dem zweiten Laminierrahmen (51) anbringbar und von diesem abnehmbar sind.

5. Herstellungsvorrichtung (30) für ein Textillaminat (W) nach Anspruch 4, ferner mit einer Drehwelle (36), die zu der Torsionsachse (21) koaxial ist.

## Revendications

1. Stratifié textile (W) dans lequel sont stratifiés une pluralité de textiles unidirectionnels (11, 12, 13, 14) ayant une pluralité de fils (10a) agencés dans une orientation uniaxiale, et les textiles unidirectionnels (11, 12, 13, 14) sont assemblés dans la direction de stratification avec des fils d'assemblage (20), dans lequel :
le stratifié textile (W) est tordu autour d'un axe de torsion (21), qui s'étend sur une ligne droite dans une direction prédéterminée,
les fils (10a) d'au moins l'un des textiles unidirectionnels (11, 12, 13, 14) sont orientés d'une manière coupant l'axe de torsion (21),
le stratifié textile (W) comprend :
une paire de sections de bord latérales (22) positionnées au niveau des extrémités opposées dans la direction axiale de l'axe de torsion (21), et
les sections de bord de torsion (23) raccordant les sections de bord latérales (22) entre elles,
**caractérisé en ce que** :
les fils (10a) du textile unidirectionnel (12, 13, 14) coupant l'axe de torsion (21), lorsqu'ils sont observés depuis la direction orthogonale à l'axe de torsion (21), s'étendent en ligne droite de l'axe de torsion (21) vers les sections de bord de torsion (23).

2. Stratifié textile (W) selon la revendication 1, dans lequel les fils d'assemblage (20) comprennent des fils d'assemblage (20a) qui s'étendent à travers les textiles unidirectionnels (11, 12, 13, 14) dans la direction de stratification, et des fils de retenue (20b) qui empêchent les fils d'assemblage (20a) de glisser du stratifié textile (W).

3. Procédé pour produire un stratifié textile (W) dans lequel sont stratifiés une pluralité de textiles unidirectionnels (11, 12, 13, 14) ayant une pluralité de fils (10a) agencés dans une orientation uniaxiale, et les textiles unidirectionnels (11, 12, 13, 14) sont assemblés dans la direction de stratification par des fils d'assemblage (20), le procédé comprenant les étapes suivantes :
stratifier les textiles unidirectionnels (11, 12, 13, 14) de sorte que les fils (10a) d'au moins l'un des textiles unidirectionnels (11, 12, 13, 14) sont orientés afin de couper un axe de torsion (21) ;
tordre les textiles unidirectionnels stratifiés (11, 12, 13, 14) autour de l'axe de torsion (21) qui s'étend en ligne droite dans une direction prédéterminée ; et
assembler les textiles unidirectionnels tordus (11, 12, 13, 14) dans la direction de stratification avec les fils d'assemblage (20).

4. Dispositif de production (30) pour un stratifié textile (W) dans lequel sont stratifiés une pluralité de textiles unidirectionnels (11, 12, 13, 14) ayant une pluralité de fils (10a) agencés dans une direction uniaxiale, les textiles unidirectionnels (11, 12, 13, 14) sont assemblés dans la direction de stratification avec des fils d'assemblage (20), et le stratifié textile (W) est tordu autour d'un axe de torsion (21) qui s'étend en ligne droite dans une direction prédéterminée, le dispositif de production (30) comprenant :
un premier bâti de stratification (31) et un second bâti de stratification (51) maintenant les textiles unidirectionnels (11, 12, 13, 14) dans un état tordu tout en étant stratifiés ; et
un élément de fixation (71) qui fixe les textiles unidirectionnels (11, 12, 13, 14) dans un état maintenu par le premier bâti de stratification (31) et le second bâti de stratification (51), dans lequel :
une pluralité de contre-plaques (41a, 41b) supportant les textiles unidirectionnels (11, 12, 13, 14) peuvent être fixées et détachées du premier bâti de stratification (31), et
une pluralité de plaques de presse (61a, 61b) qui compriment les textiles unidirectionnels (11, 12, 13, 14) vers la contre-plaque (41a, 41b), peuvent être fixées et détachées du second bâti de stratification (51).

5. Dispositif de production (30) pour un stratifié textile (W) selon la revendication 4, comprenant en outre un arbre de rotation (36) qui est coaxial avec l'axe de torsion (21).
